**Europäisches Patentamt**

**European Patent Office**

**Office européen des brevets**

(19)

(11) Veröffentlichungsnummer : **0 389 823 B1**

## (12) EUROPÄISCHE PATENTSCHRIFT

(45) Veröffentlichungstag der Patentschrift :
**14.10.92 Patentblatt 92/42**

(51) Int. Cl.$^5$ : **G01C 15/10,** G01C 9/06

(21) Anmeldenummer : **90104091.5**

(22) Anmeldetag : **02.03.90**

(54) **Vorrichtung zum Messen von Verschiebungen und Deformationen von Bauwerken.**

(30) Priorität : **20.03.89 CH 1020/89**

(43) Veröffentlichungstag der Anmeldung :
**03.10.90 Patentblatt 90/40**

(45) Bekanntmachung des Hinweises auf die
Patenterteilung :
**14.10.92 Patentblatt 92/42**

(84) Benannte Vertragsstaaten :
**AT CH FR IT LI**

(56) Entgegenhaltungen :
**CH-A- 398 383**
**FR-A- 2 221 713**
**FR-A- 2 477 701**

(73) Patentinhaber : **ASEA BROWN BOVERI AG**
**Haselstrasse**
**CH-5401 Baden (CH)**

(72) Erfinder : **Brändle, Hubert, Dr.**
**Bahnhofstrasse 34**
**CH-8112 Otelfingen (CH)**
Erfinder : **Schad, Hanspeter, Dr.**
**Boldistrasse 6**
**CH-5415 Nussbaumen (CH)**

## Beschreibung

Die Erfindung betrifft eine Vorrichtung zum Messen von Verschiebungen und Deformationen von Bauwerken, umfassend ein Lot mit einem in einem Fixpunkt befestigten Seil sowie mit ersten Mitteln zum Spannen des Seils in einer Bezugsrichtung und zweite Mittel zum Messen einer relativen Position eines Referenzpunktes des Seils gegenüber dem Bauwerk.

Eine derartige Vorrichtung ist aus der FR-A-2477701 bekannt, die mittels einer Regelschaltung das Lot in einer festen Stellung hält. Solche Vorrichtungen werden beispielsweise bei Talsperren eingesetzt, die äusseren Belastungen ausgesetzt sind, welche Verformungen des Bauwerks und Durchsickerungen dessen Untergrunds bewirken. Treten Abweichungen vom Normalverhalten auf, ist u.U. die Sicherheit der Stauanlage gefährdet. Die Belastungen einer Talsperre und ihr Verhalten müssen deshalb ständig überwacht werden, um abnormale Veränderungen frühzeitig erkennen zu können. Zur Ueberwachung gehören sowohl visuelle Kontrollen als auch redundante Messungen.

Ganz allgemein eignet sich das Lot als Bezugsachse, um die Neigung sowie die horizontale Verschiebung der vertikalen Achsen von Hoch- und Tiefbauwerken, wie auch von Produktionsanlagen festzustellen. Aus den in verschiedenen Höhen gemessenen Auslenkungen des Lots ergibt sich dann die Biegelinie.

Das normale Lot kann mit einem Gewichts- oder einem Schwimmlot angezeigt werden. Während der Fixpunkt, d.h. die Verankerung des Lotdrahtes, beim Gewichtslot oben ist, ist er beim Schwimmlot unten, wobei der Auftrieb eines Körpers in einer Flüssigkeit die ausrichtende Kraft darstellt. Das Schwimmlot ist insbesondere auch dazu geeignet, Verschiebungen des Untergrundes festzustellen. Mit einem modifizierten Gewichtslot, einem sog. Horizontal- oder Schräglot, können auch Auslenkungen gegenüber einer beliebigen Bezugsrichtung bestimmt werden. Bei diesem Lottyp wird der Draht vom Verankerungspunkt aus von einer Rolle als zweitem Fixpunkt in die gewünschte Richtung als Bezugslinie geführt. Der Draht wird über die Umlenkrolle vom Lotgewicht gespannt.

Um die Auslenkungen des Drahtseils, und damit die Auslenkung eines bestimmten Mauerquerschnitts, zu messen, wird z.B. ein Koordiskop (z.B. Koordiskop KK-84 von der Firma Huggenberger, Hohlstr. 176, 8004 Zürich) verwendet. Dabei wird das im Visierausschnitt einer Optik erscheinende Bild des Drahtseils mittels Feinstellschraube zentriert und dann die Einstellung digital abgelesen. Während dieses von Hand bediente Instrument sehr robust und präzise ist, erlaubt es aber keine kontinuierliche Fernüberwachung von einer Zentrale aus.

Ein zur Fernüberwachung geeignetes Instrument ist z.B. der ebenfalls von der Firma Huggenberger erhältliche Telekoordinator. Hier wird die Auslenkung des Lots mit einem kleinen Hebel mechanisch abgetastet und dann in ein elektrisches Signal umgewandelt, welches der Zentrale übermittelt werden kann. Da aber bei einer Lotlänge von mehreren zehn Metern schon Kräfte in der Grössenordnung von 1 mN reichen, um eine Auslenkung grösser als die geforderte Messgenauigkeit zu bewirken, können durch den Telekoordinator Messverfälschungen verursacht werden. Diese Gefahr wird insbesondere dann akut, wenn die Mechanik wegen Staubund Kalkablagerungen ihre Reibungsarmut verliert.

Aufgabe der Erfindung ist es nun, eine Vorrichtung der eingangs genannten Art anzugeben, welche die beim Stand der Technik bestehenden Nachteile vermeidet und zur Fernüberwachung von einer Zentrale her geeignet ist. Die Vorrichtung soll ausserdem sowohl langzeitstabil als auch korrosionsbeständig sein.

Erfindungsgemäss besteht die Lösung darin, dass bei einer Vorrichtung der genannten Art die zweiten Mittel

c) einen senkrecht zum Seil mittels Antrieben verschiebbaren Schlitten,

d) mindestens einen auf dem Schlitten angeordneten, senkrecht zum Seil ausgerichteten, berührungslosen Abstandssensor, welcher ein abstandsabhängiges Sensorsignal erzeugt,

e) eine Regelschaltung, welche den mindestens einen Abstandssensor durch Nachlaufsteuerung der Antriebe entsprechend dem Sensorsignal in einem vorgegebenen, konstanten Abstand zum Seil hält und

f) mindestens einen Wegsensor zum Messen der Position des Referenzpunktes, welcher Wegsensor unabhängig von der digitalen Regelschaltung eine Position des Schlittens gegenüber dem Bauwerk misst, umfassen.

In einer bevorzugten Ausführungsform sind auf dem Schlitten zwei zueinander und zum Seil senkrecht ausgerichtete Wirbelstromsensoren angeordnet. Der Schlitten ist mittels zwei Antrieben in entsprechend zwei zueinander senkrechten Richtungen verschiebbar.

Zum Erhöhen der Empfindlichkeit der Wirbelstromsensoren ist das Seil im Referenzpunkt vorzugsweise mit einem Metallzylinder verstärkt.

Als Abstandssensor kann z.B. auch ein Hallsensor oder eine magnetische Feldplatte verwendet werden. In diesem Fall ist das Seil im Referenzpunkt mit einem Permanentmagneten zu versehen.

Als Wegsensor eignet sich ein Drehencoder, insbesondere ein Multiturndrehencoder oder ein Leitplastikweggeber.

Eine vorteilhaft einfache Regelschaltung lässt sich z.B. so realisieren, dass eine Referenzspannung entsprechend dem konstanten Abstand vorgegeben wird, das vom Abstandssensor gelieferte Sensorsignal mit der Referenzspannung verglichen und bei einer Abweichung um mehr als einen vorgegebenen Spannungsschritt mittels der Antriebe der vorgegebene konstante Abstand wieder hergestellt wird.

Der Vorteil einer digitalen gegenüber einer analogen Regelschaltung liegt darin, dass die Antriebe für eine längere Zeit in Ruhe verharren und nur ab und zu sehr schnell den Schlitten nachführen. Als Folge davon nützen sich die mechanischen Teile sehr viel langsamer ab als bei einer Steuerung mit analogen Servomotoren, welche stets in Bewegung sind.

Die Erfindung eignet sich gleichgut für die Anwendung bei Gewichtsloten wie bei Schwimm- oder Schrägloten.

Nachfolgend soll die Erfindung anhand von Ausführungsbeispielen im Zusammenhang mit der Zeichnung näher erläutert werden. Es zeigen:

Fig. 1 einen Querschnitt einer Staumauer mit Vorrichtungen zur Deformationsmessung;

Fig. 2 ein Gewichtslot;

Fig. 3 ein Schwimmlot;

Fig. 4 eine Vorrichtung zum Messen einer relativen Position eines Referenzpunktes des Seils gegenüber dem Bauwerk.

Fig. 5 eine Darstellung der Kennlinie eines Wirbelstromsensors; und

Fig. 6 eine Darstellung der Abhängigkeit des Sensorsignals von der Verschiebung eines Metallzylinders quer zur Sensorachse.

Die in der Zeichnung verwendeten Bezugszeichen und deren Bedeutung sind in der Bezeichnungsliste zusammenfassend tabelliert. Grundsätzlich werden für gleiche Teile gleiche Bezugszeichen verwendet.

Im folgenden wird die Erfindung anhand einer bevorzugten Ausführungsform erläutert, welche sich insbesondere zur Ueberwachung von Talsperren eignet.

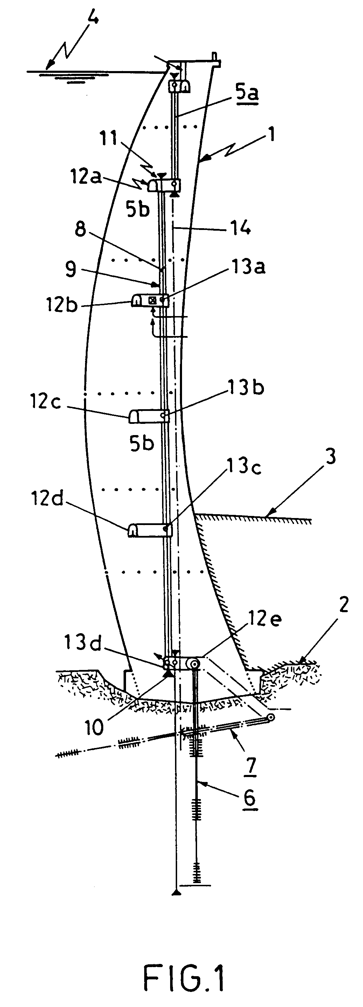

Fig. 1 zeigt eine gekrümmte Staumauer 1 im Querschnitt. Sie stützt sich auf einem Felsen 2 ab und kann so dem Druck eines Stausees 4 standhalten. Auf der dem Stausee 4 abgewandten Seite der Staumauer 1 befindet sich eine kleine Aufschüttung 3.

In Abhängigkeit von Temperatur und Füllstand des Stausees 4 wirken Kräfte auf die Staumauer 1, welche zu Deformationen und eventuell Verschiebungen führen können. Um die Staumauer 1 diesbezüglich zu überwachen, sind unter anderem mehrere Gewichts- und/oder Schwimmlote darin eingebaut. Als Beispiel sind in Fig. 1 zwei Gewichtslote 5a, 5b und ein Schwimmlot 6 eingezeichnet. Im Felsen 2 ist ferner ein sog. Schräglot 7 zum Messen von Verschiebungen des Untergrundes vorgesehen. Zur vollständigen Ueberwachung müssen natürlich mehrere derartige Systeme, verteilt entlang der Staumauer 1, eingesetzt werden.

Im folgenden wird nun der Aufbau und die Funktionsweise einer erfindungsgemässen Vorrichtung mit Gewichtslot näher beschrieben.

Das Gewichtslot 5b besteht im wesentlichen aus einem Seil 8, welches in einem Schacht 9 der Staumauer 1 mit einem Gewicht 10 in einer vertikalen, raumfesten Bezugsrichtung gespannt wird. Aufgehängt ist das Gewichtslot 5b in einem Fixpunkt 11.

Auf verschiedenen Höhen des Schachtes 9 befinden sich Zugangsstollen 12a,..,12e, welche u.a. Zugang zu den Messstellen 13a,..,13d gewähren. An jeder Messstelle 13a,..,13d befinden sich Mittel zum Messen der relativen Position des Seils 8 gegenüber der Staumauer 1. Alle gemessenen Daten (Verschiebungen) werden zwecks Auswertung gesammelt und auf eine gedachte Bezugsgerade 14 umgerechnet, wodurch sich die Deformationen qualifizieren und quantifizieren lassen.

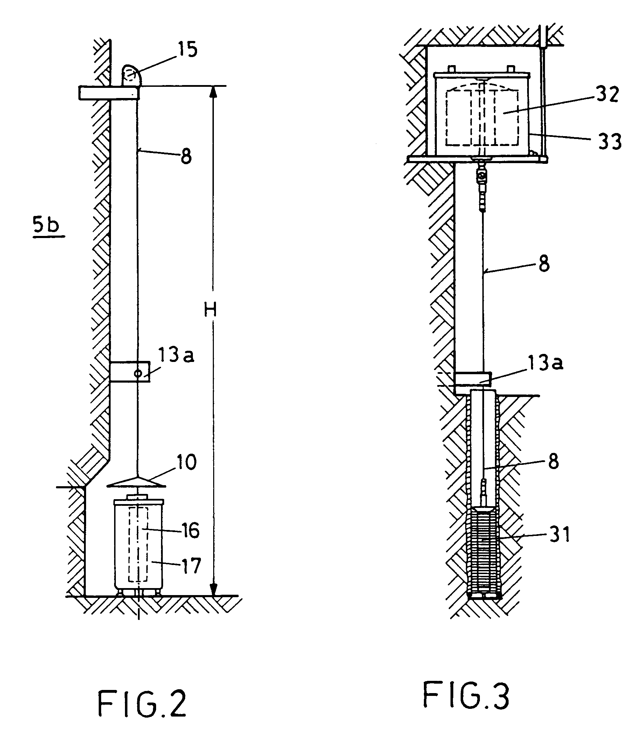

Fig. 2 zeigt ein Gewichtslot im Detail. Der Fixpunkt 11 wird durch eine im Bauwerk verankerte, abstimmbare Aufhängung 15 definiert. Das Gewicht 10 wird vorzugsweise bedämpft durch einen angehängten und in eine Flüssigkeit 17 (z.B. Wasser, Oel etc.) eingetauchten Körper 16. An einer oder mehreren Messstellen 13a sind die Mittel zum Messen der relativen Position des Seils am Bauwerk fixiert.

Fig. 3 zeigt ein Schwimmlot. Der Fixpunkt 11 wird hier durch eine im Untergrund einbetonierte Verankerung 31 gegeben. Ein Schwimmkörper 32, welcher in einem aufgehängten Gefäss 33 in einer Flüssigkeit auftreibt, spannt das Seil 8 in vertikaler Richtung. Wie beim Gewichtslot sind an einer oder mehreren Messstellen 13a die Mittel zum Messen der relativen Position des Seils 8 am Bauwerk fixiert.

Von der Firma Huggenberger z.B. sind derartige Gewichtslote mit einer Höhe H von wenigen zehn bis etwa 200 m erhältlich. Das Gewicht 10 bewegt sich entsprechend in einem Bereich von etwa 20 - 200 kg. Als Seil 8 dient ein Draht aus rostfreiem Spezialstahl mit einem Durchmesser zwischen 1 - 3 mm.

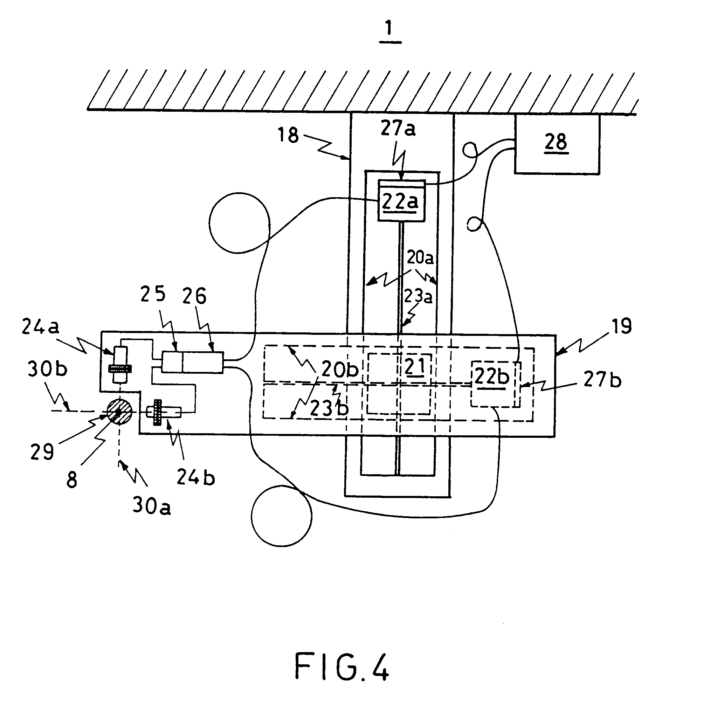

Fig. 4 zeigt nun die erfindungswesentliche Messeinheit zum berührungslosen Messen der Lotdrahtposition. Sie ist auf einem Träger 18 aufgebaut, welcher fest im Bauwerk (im vorliegenden Fall in der Staumauer 1) verankert ist. Auf dem Träger 18 ist ein Schlitten 19 angeordnet, welcher in einer zum Seil 8 senkrechten Ebene verschiebbar ist.

Die Verschiebbarkeit des Schlittens 19 lässt sich mit den in der Fig. 4 nur beispielhaft und andeutungsweise eingezeichneten Mitteln realisieren. Sie umfassen eine im Träger 18 angebrachte erste Führung 20a, eine am Schlitten 19 senkrecht zur ersten Führung 20a ausgerichtete zweite Führung 20b und ein Zwischenelement 21, welches in den beiden Führungen 20a, 20b läuft und eine mechanisch stabile Verbindung zwischen Schlitten 19 und Träger 18 schafft.

Zum Verschieben des Schlittens 19 eignen sich zwei unabhängige Antriebe, welche je einen Schrittmotor 22a, 22b und eine vom entsprechenden Schrittmotor 22a, 22b angetriebene Spindel 23a, 23b aufweisen. Die Spindeln 23a, 23b schliesslich verschieben und fixieren das Zwischenelement 21 in den entsprechenden Führungen 20a, 20b.

Auf dem Schlitten 19 sind zwei senkrecht zueinander und zum Seil 8 ausgerichtete berührungslose Abstandssensoren 24a, 24b angeordnet. Die Richtung eines Abstandssensors ist dabei gegeben durch eine dem Abstandssensor 24a resp. 24b inhärente Sensorachse 30a resp. 30b. Es ist ausserdem von Vorteil, wenn die beiden Sensorachsen 30a, 30b je in Richtung einer Führung 20a, 20b liegen und sich in einem Referenzpunkt schneiden.

Jeder Abstandssensor 24a, 24b hat einen Signalausgang, über welchen ein Sensorsignal einer digitalen Regelschaltung 25 zugeführt wird. Die Regelschaltung 25 beinhaltet eine Nachlaufsteuerung, um die Abstandssensoren 24a, 24b stets in einem gegebenen, konstanten Abstand zum Seil 8 zu halten. Entsprechend gibt sie an eine Antriebssteuerung 26 Steuersignale aus, welche dann ihrerseits die beiden Schrittmotoren 22a, 22b ansteuert.

Unabhängig von der Nachlaufsteuerung messen zwei Wegsensoren 27a, 27b die Position des Schlittens 19 und damit die Position des Referenzpunktes gegenüber dem Bauwerk. Gemäss einer bevorzugten Ausführungsform sind die Wegsensoren 27a, 27b Drehencoder, welche die Winkelposition der Spindeln 23a, 23b abtasten und an eine Anzeige 28 weitergeben. Ein kleiner Rechner wertet die Signale der Wegsensoren 27a, 27b aus und rechnet die Winkelpositionen in Längen um und gibt diese z.B. in digitaler Form aus. Mit Vorteil besitzt die Anzeige 28 einen Busanschluss, über welchen sie von einer Ueberwachungszentrale her abgefragt werden kann.

Das Ziel der Nachlaufsteuerung besteht darin, den Schlitten 19 stets derart zu positionieren, dass das Seil 8 genau durch den Referenzpunkt geht. Im folgenden wird nun ein einfaches Ausführungsbeispiel einer solchen Nachlaufsteuerung gegeben. Es ist dabei klar, dass es eine grosse Zahl weiterer Realisierungsmöglichkeiten dieses Teils der Erfindung gibt.

Jeder Abstandssensor 24a, 24b erzeugt ein Sensorsignal, welches vom Abstand zwischen Seil 8 und Abstandssensor 24a resp. 24b abhängt. In der Regelschaltung 25 wird nun das Sensorsignal je mit einem vorgegebenen konstanten Referenzwert verglichen, welcher für den vorgegebenen konstanten Abstand steht. Beträgt der Unterschied weniger als eine vorgegebene Schrittweite, so befindet sich das Seil 8 offenbar bis auf einen vernachlässigbar kleinen Fehler im Referenzpunkt. Ueber- oder unterschreitet das Sensorsignal hingegen den Referenzwert um mehr als die gegebene Schrittweite, so erzeugt die Regelschaltung 25 ein entsprechendes Steuersignal, welches bewirkt, dass die Antriebssteuerung 26 den betreffenden Schrittmotor um einen Schritt vor oder zurück setzt, je nachdem ob der Abstand zum Seil zu verringern oder vergrössern ist.

Die Schrittweite wird so gewählt, dass sie kleiner oder gleich gross ist wie der zulässige Messfehler. Zur Erläuterung folgt ein mit Zahlen belegtes, praktisches Ausführungsbeispiel.

Gemäss einer besonders bevorzugten Ausführungsform sind die Abstandssensoren 24a, 24b Wirbelstromsensoren (z.B. Baumer IWA 12 U 9002). Diese bestehen im Kern aus einem elektromagnetischen Oszillator, dessen Schwingungsamplitude durch Wirbelströme, die in einer benachbarten Metallfläche induziert werden, gedämpft wird. Eine der Schwingungsamplitude proportionale Signalspannung dient in einem engen Bereich als Abstandsreferenz.

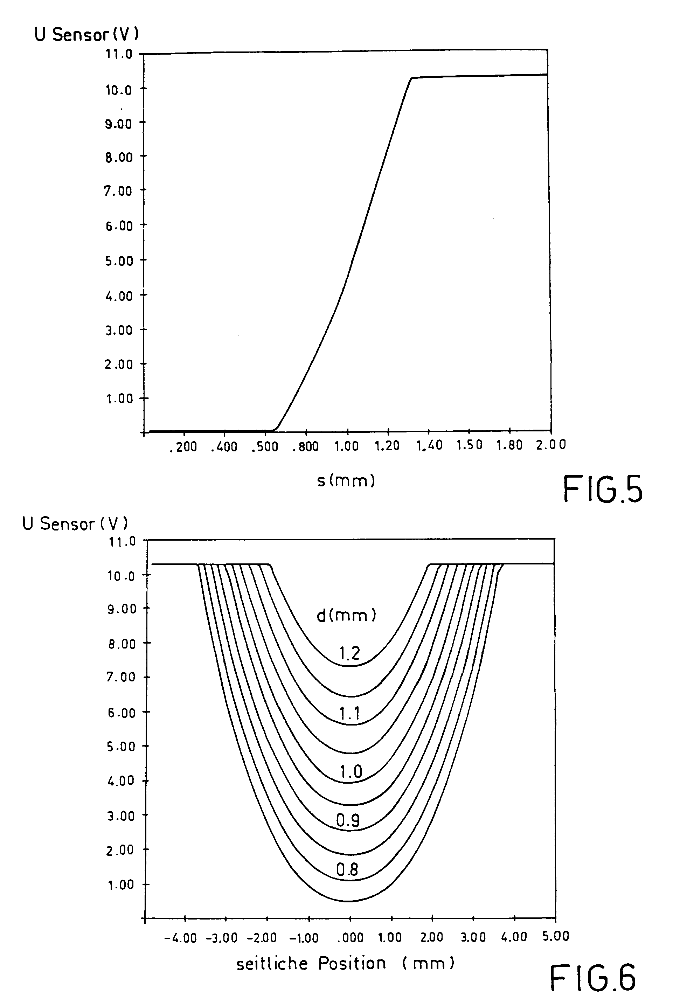

Fig. 5 zeigt eine Kennlinie eines Wirbelstromsensors. Auf der Abszisse ist der Abstand s Sensor zu Metallfläche und auf der Ordinate das Sensorsignal in V aufgetragen. In einem Abstandsbereich zwischen etwa 0.7 und 1.3 mm steigt das Sensorsignal von 0 V auf etwa 10 V. Legt man den Referenzwert in die Mitte der Kennlinie (z.B. auf 5 V), so erhält man eine konstante Empfindlichkeit von 20 mV/$\mu$m in einem Bereich von +/- 0.25 mm. Verwendet man nun einen Schrittmotor mit 100 Schritten pro Umdrehung und eine Spindel 23a resp. 23b mit einer Steigung von 0.5 mm pro Umdrehung, so ergibt sich eine Verschiebung des Schlittens 19 von 5 $\mu$m pro Schritt. Die Schrittweite wird damit mit Vorteil auf 100 mV festgelegt, was genau den 5 $\mu$m Vorschub pro Schritt des Schrittmotors entspricht.

Mit einer solchen Bemessung liegt man somit weit unter der geforderten Messgenauigkeit von +/- 0.1 mm für Deformationsmessungen an Staumauern.

Wirbelstromsensoren arbeiten typischerweise in einem Abstand, welcher in der Grössenordnung des Durchmessers der sensiblen Spule im Sensor entspricht. Im obigen Beispiel lag er in der Grössenordnung von

EP 0 389 823 B1

1 mm. Um die Empfindlichkeit und den Abstand zu vergrössern, wird das Seil 8 im Referenzpunkt vorzugsweise mit einem Metallzylinder 29 verstärkt. Aufgrund der Symmetrie des Metallzylinders 29 wird die Messung der Position des Seils 8 bei Verdrillung und bei Längenänderung des Drahtes nicht verfälscht.

Die Grundlage dafür, dass der Metallzylinder verwendet werden kann, ist die Tatsache, dass die Abhängigkeit des Sensorsignals bei Verschiebung des Metallzylinders 29 quer zur Sensorachse in Achsennähe vernachlässigbar klein ist.

Fig. 5 zeigt die Abhängigkeit des Sensorsignals bei Verschiebungen quer zur Sensorachse. Auf der Abszisse ist der Abstand der Achse eines 14 mm starken Metallzylinders (Stahl St 37) von der Sensorachse aufgetragen. Auf der Ordinate ist das resultierende Sensorsignal eines Wirbelstromsensors aufgetragen. Die Messung wurde für verschiedene Abstände s durchgeführt (s = 0.75, 0.80, .. , 1.2 mm). Jede Kurve hat auf der Sensorachse eine horizontale Tangente und steigt beidseitig näherungsweise quadratisch an. Das Sensorsignal ist damit im geforderten Bereich der Messgenauigkeit (im vorliegenden Fall +/- 0.1 mm) im wesentlichen unempfindlich gegen Querverschiebungen des Metallzylinders. Entsprechend können die senkrecht zueinander ausgerichteten Wirbelstromsensoren als unabhängig voneinander betrachtet werden.

Es soll an dieser Stelle nochmals betont werden, dass der Metallzylinder nicht Voraussetzung für ein korrektes Funktionieren der Erfindung ist. Auch ein Drahtseil von 1 - 3 mm Durchmesser kann schon ohne Metallzylinder hinreichend starke Abstandssignale bewirken. Dies ist wichtig in Fällen, wo aus gewissen Gründen kein solcher Metallzylinder angebracht werden kann (z.B. Nachrüsten alter Anlagen). Nicht zuletzt können ja auch grössere und deshalb empfindlichere Wirbelstromsensoren eingesetzt werden, um den Nachteil des kleinen Durchmessers zu kompensieren.

Ein wichtiges Merkmal der Erfindung ist die von der Regelung unabhängige, absolute Positionsbestimmung. Diese wird im obigen Ausführungsbeispiel von den beiden Drehencodern vorgenommen. Für die Deformationnsmessung mit Loten ist es wichtig, dass die Wegsensoren 27a, 27b neben der geforderten Messgenauigkeit auch einen möglichst grossen Hub (von z.B. 250 mm) aufweisen. Aus diesem Grund sind sogenannte Multiturndrehencoder (wie sie z.B. unter der Bezeichnung Heidenhain ROC 221 im Handel erhältlich sind) als Wegsensoren 27a, 27b besonders vorteilhaft. Mit 4096 Schritten pro Umdrehung bei insgesamt 512 Umdrehungen haben sie sowohl eine mehrfach ausreichende Auflösung als auch einen Messbereich von etlichen 10 cm.

Dass die Erfindung nicht auf das oben beschriebene Ausführungsbeispiel beschränkt ist, soll anhand weitere Ausführungsformen gezeigt werden.

Zur Bestimmung der Position des Schlittens 19, und damit auch des Seils 8, eignen sich auch Leitplastikwegaufnehmer. Dabei wird ein verschiebbarer Kontakt auf einer dünnen Schicht mit einem gleichmässigen Widerstand vom Schlitten mitgeführt und der Spannungsabfall (welcher proportional zum Weg ist) detektiert und ausgewertet. Leitplastikwegaufnehmer (wie sie z.B. von der Firma Genge & Thoma erhältlich sind) sind relativ preisgünstig und abnützungsarm. Ferner ist die Auswertung des Signals in der Anzeige mit viel geringerem Aufwand verbunden als bei Drehencodern.

Als Abstandssensoren 24a, 24b eignen sich z.B. auch Hallsensoren oder magnetische Feldplatten. In diesem Fall ist im Referenzpunkt am Seil 8 ein Permanentmagnet anzubringen. Hier bewirkt das radial mit der dritten Potenz ($1/r^3$) abfallende Magnetfeld im Abstandssensor eine Veränderung z.B. der Hallspannung. Zur Abstandsmessung sind hier aber pro Richtung zwei (d.h. insgesamt vier), jeweils auf gegenüberliegenden Seiten des Seils 8 angeordnete Abstandssensoren nötig.

Es ist nicht unbedingt erforderlich, dass sich die Sensorachsen 30a, 30b in einem Punkt schneiden. Sie können z.B. auch in verschiedenen, übereinanderliegenden Ebenen liegen. Dies ist natürlich insbesondere dann der Fall, wenn für jede Richtung eine selbständige Messeinheit aufgebaut wird oder wenn überhaupt nur in einer Richtung gemessen wird.

Anstatt zwei können auch drei oder mehr Abstandssensoren in geeigneter Weise vorgesehen werden. U.u. kann es dann von Vorteil sein, wenn sie nicht senkrecht sondern in einem bestimmten Winkel zueinander angeordnet sind.

Die Nachlaufsteuerung kann durchaus auch mit einer analogen Regelschaltung und mit Servomotoren realisiert werden. Eine entsprechende Ausführungsform lässt sich aufgrund des oben Gesagten ohne weiteres aufbauen.

Die Erfindung kann ebensogut mit Schwimm- oder Schrägloten verwirklicht werden.

Im Hinblick auf die Verwendung der Erfindung für Deformationsmessungen an Staumauern ist zu erwarten, dass aufgrund der geringen Temperaturabhängigkeit und der geringen Drift des Wirbelstromsensors und der mechanischen Stabilität der Schlittenführung eine berührungsfreie, absolute Positionsbestimmung mit +/- 10 μm über mehrere Jahre hinweg möglich ist. Die zur Realisierung der Erfindung nötigen mechanischen und elektronischen Elemente sind alle seit einiger Zeit auf dem Markt erhältlich (was wichtig zur Beurteilung deren Zuverlässigkeit ist) und lassen sich ohne weiteres gegen Umwelteinflüsse wie Spritz- und Strahlwasser, Staub und chemische Ablagerungen schützen (Korrosionsschutz).

Zusammenfassend kann gesagt werden, dass durch das berührungslose Messen in Verbindung mit der Nachlaufsteuerung eine höchst genaue Vorrichtung zum Messen von Deformationen und Verschiebungen von Bauwerken geschaffen wurde.

**Patentansprüche**

1. Vorrichtung zum Messen von Verschiebungen und Deformationen von Bauwerken (1), umfassend

   a) ein Lot (5a;5b;6;7) mit einem in einem Fixpunkt (11) befestigten Seil (8) sowie mit ersten Mitteln (10;32) zum Spannen des Seils (8) in einer Bezugsrichtung und

   b) zweite Mittel (13a;...;13d) zum Messen einer relativen Position eines Referenzpunktes des Seils (8) gegenüber dem Bauwerk (1),

   dadurch gekennzeichnet, dass die zweiten Mittel (13a;...;13d)

   c) einen senkrecht zum Seil (8) mittels Antrieben (22a;22b) verschiebbaren Schlitten (19),

   d) mindestens einen auf dem Schlitten (19) angeordneten, senkrecht zum Seil (8) ausgerichteten, berührungslosen Abstandssensor (24a;24b), welcher ein abstandsabhängiges Sensorsignal erzeugt,

   e) eine Regelschaltung (25), welche den mindestens einen Abstandssensor (24a;24b) durch Nachlaufsteuerung der Antriebe (22a;22b) entsprechend dem Sensorsignal in einem vorgegebenen, konstanten Abstand zum Seil (8) hält und

   f) mindestens einen Wegsensor (27a;27b) zum Messen der Position des Referenzpunktes, welcher Wegsensor (27a;27b) unabhängig von der Regelschaltung (25) eine Position des Schlittens (19) gegenüber dem Bauwerk (1) misst, umfassen.

2. Vorrichtung nach Anspruch 1, dadurch gekennzeichnet, dass

   a) auf dem Schlitten (19) zwei zueinander und zum Seil (8) senkrecht ausgerichtete Abstandssensoren (24a,24b) angeordnet sind und

   b) der Schlitten (19) mittels zwei Antrieben (22a,22b) in entsprechend zwei zueinander senkrechten Richtungen verschiebbar ist.

3. Vorrichtung nach Anspruch 1, dadurch gekennzeichnet, dass die Abstandssensoren (24a;24b) Wirbelstromsensoren sind.

4. Vorrichtung nach Anspruch 3, dadurch gekennzeichnet, dass das Seil (8) zwecks Erhöhen der Empfindlichkeit der Wirbelstromsensoren im Referenzpunkt mit einem Metallzylinder (29) verstärkt ist.

5. Vorrichtung nach Anspruch 1, dadurch gekennzeichnet, dass der mindestens eine Abstandssensor (24a;24b) ein Hallsensor oder eine magnetische Feldplatte ist und dass das Seil (8) im Referenzpunkt mit einem Permanentmagneten versehen ist.

6. Vorrichtung nach Anspruch 1, dadurch gekennzeichnet, dass die Antriebe (22a;22b) einen Schrittmotor (22a;22b) und eine von diesem getriebene Spindel (23a;23b) umfassen.

7. Vorrichtung nach Anspruch 6. dadurch gekennzeichnet, dass der zumindest eine Wegsensor (27a;27b) ein Drehencoder ist.

8. Vorrichtung nach Anspruch 1, dadurch gekennzeichnet, dass der Wegsensor (27a;27b) ein Leitplastikweggeber ist.

9. Vorrichtung nach Anspruch 1, dadurch gekennzeichnet, dass die Regelschaltung (25) einen Referenzwert entsprechend dem konstanten Abstand erzeugt, das vom Abstandssensor gelieferte Sensorsignal mit dem Referenzwert vergleicht und bei einer Abweichung um mehr als eine vorgegebene Schrittweite mittels der Antriebe (22a;22b) den vorgegebenen konstanten Abstand wieder herstellt.

10. Vorrichtung nach Anspruch 1 dadurch gekennzeichnet, dass das in einem Fixpunkt (11) befestigte Seil (8) und die ersten Mittel (10;32 zum Spannen des Seils (8) in einer Bezugsrichtung ein Gewichts-, Schwimm- oder Schräglot bilden.

## Claims

1. Device for measuring displacements and deformations of structures (1), comprising
   a) a plumb-line (5a; 5b; 6; 7) having a cable (8) fastened in a fixed point (11) and having first means (10; 32) for tensioning the cable (8) in a reference direction and
   b) second means (13a; ...; 13d) for measuring a relative position of a reference point of the cable (8) in relation to the structure (1),
   characterised in that the second means (13; ...; 13d) comprise
   c) a slide (19) which can be displaced perpendicularly to the cable (8) by means of drive mechanisms (22a; 22b),
   d) at least one contactless distance sensor (24a; 24b), disposed on the slide (19) and aligned perpendicularly to the cable (8), which generates a distance-dependent sensor signal,
   e) a control circuit (25) which, by means of the tracking control system of the drive mechanisms (22a; 22b), keeps the at least one distance sensor (24a; 24b), in accordance with the sensor signal, at a prespecified constant distance from the cable (8), and
   f) at least one path sensor (27a; 27b) for measuring the position of the reference point, which path sensor (27a; 27b), independently of the control circuit (25), measures a position of the slide (19) in relation to the structure (1).

2. Device according to Claim 1, characterised in that
   a) on the slide (19), there are disposed two distance sensors (24a; 24b) aligned perpendicularly to one another and to the cable (8), and
   b) the slide (19) is displaceable by means of two drive mechanisms (22a; 22b) in, correspondingly, two directions lying perpendicularly to one another.

3. Device according to Claim 1, characterised in that the distance sensors (24a; 24b) are eddy-current sensors.

4. Device according to Claim 3, characterised in that the cable (8) is reinforced at the reference point by a metal cylinder (29), for the purpose of increasing the sensitivity of the eddy-current sensors.

5. Device according to Claim 1, characterised in that the at least one distance sensor (24a; 24b) is a Hall sensor or a magnetic field-depending resistor and in that the cable (8) is provided in the reference point with a permanent magnet.

6. Device according to Claim 1, characterised in that the drive mechanisms (22a; 22b) comprise a stepping motor (22a; 22b) and a spindle (23a; 23b) driven thereby.

7. Device according to Claim 6, characterised in that the at least one path sensor (27a; 27b) is a rotation-coder.

8. Device according to Claim 1, characterised in that the path sensor (27a; 27b) is a conductive-plastic path transmitter.

9. Device according to Claim 1, characterised in that the control circuit (25) generates a reference value corresponding to the constant distance, compares the sensor signal delivered by the distance sensor with the reference value and, in the event of deviation by more than a prespecified step width, restores the prespecifed constant distance by means of the drive mechanisms (22a; 22b).

10. Device according to Claim 1, characterised in that the cable (8) fastened at a fixed point (11) and the first means (10; 32) for tensioning the cable (8) in a reference direction form a weighted, a floating or a diagonal plumb-line.

## Revendications

1. Dispositif pour la mesure de déplacements et de déformations de constructions (1), comportant
   a) un fil à plomb (5a; 5b; 6; 7) avec un câble (8) accroché en un point fixe (11) ainsi qu'avec des premiers moyens (10; 32) pour tendre le câble (8) dans une direction de référence, et

b) des deuxièmes moyens (13a; ... 13d) pour mesurer une position relative d'un point de référence du câble (8) par rapport à la construction (1),

caractérisé en ce que les deuxièmes moyens (13a; ... 13d) comprennent

c) un chariot (19) déplaçable perpendiculairement au câble (8) au moyen d'organes moteurs (22a; 22b),

d) au moins un capteur de distance sans contact (24a; 24b), orienté perpendiculairement au câble (8), monté sur le chariot (19), qui produit un signal de détection dépendant de la distance,

e) un circuit de régulation (25), qui maintient ledit au moins un capteur de distance (24a; 24b) à une distance constante prédéterminée par rapport au câble (8), par une commande asservie des organes moteurs (22a; 22b) en fonction du signal de détection, et

f) au moins un capteur de déplacement (27a; 27b) pour mesurer la position du point de référence, capteur de déplacement (27a; 27b) qui mesure, indépendamment du circuit de régulation numérique (25), une position du chariot (19) par rapport à la construction (1).

2. Dispositif suivant la revendication 1, caractérisé en ce que

a) sur le chariot (19) sont disposés deux capteurs de distance (24a; 24b) orientés perpendiculairement l'un à l'autre et au câble (8), et

b) le chariot (19) est déplaçable au moyen de deux organes moteurs (22a; 22b) dans deux directions correspondantes perpendiculaires l'une à l'autre.

3. Dispositif suivant la revendication 1, caractérisé en ce que les capteurs de distance (24a; 24b) sont des capteurs à courants de Foucault.

4. Dispositif suivant la revendication 3, caractérisé en ce que le câble (8) est renforcé au point de référence par un cylindre métallique (29) pour augmenter la sensibilité des capteurs à courants de Foucault.

5. Dispositif suivant la revendication 1, caractérisé en ce qu'au moins un des capteurs de distance (24a; 24b) est un capteur à effet de Hall ou une plaque à champ magnétique et en ce que le câble (8) est pourvu d'un aimant permanent au point de référence.

6. Dispositif suivant la revendication 1, caractérisé en ce que les organes moteurs (22a; 22b) comprennent un moteur pas à pas (22a; 22b) et une vis-mère (23a; 23b) entraînée par celui-ci.

7. Dispositif suivant la revendication 6, caractérisé en ce qu'au moins un des capteurs de course (27a; 27b) est un encodeur rotatif.

8. Dispositif suivant la revendication 1, caractérisé en ce que le capteur de déplacement (27a; 27b) est un capteur de déplacement en plastique conducteur.

9. Dispositif suivant la revendication 1, caractérisé en ce que le circuit de régulation (25) produit une valeur de référence correspondant à la distance constante, en ce qu'il compare le signal de détection produit par le capteur de distance avec la valeur de référence et en ce qu'en cas d'écart de plus d'une largeur de pas prédéterminée, il rétablit la distance constante prédéterminée au moyen des organes moteurs (22a; 22b).

10. Dispositif suivant la revendication 1, caractérisé en ce que le câble (8) accroché en un point fixe (11) et les premiers moyens (10; 32) pour tendre le câble (8) dans une direction de référence forment un fil à plomb à gravité, un fil à plomb à flotteur ou un fil à plomb oblique.

FIG.1

FIG.2

FIG.3

FIG.4

U Sensor (V)

FIG.5

U Sensor (V)

FIG.6